# EUROPEAN PATENT APPLICATION

(11) **EP 3 851 470 A1**
(43) Date of publication of application: **21.07.2021**
(21) Application number: 20151561.6
(22) Date of filing: 14.01.2020
(51) Int. Cl.: C08G 18/12, B32B 27/40, C08G 18/73, C08G 18/75, C09J 175/04

(54) **AN AQUEOUS TWO-COMPONENT ADHESIVE**

(71) Applicant: Covestro Intellectual Property GmbH & Co. KG, 51373 Leverkusen (DE); Covestro Deutschland AG, 51373 Leverkusen (DE)
(72) Inventor: The designation of the inventor has not yet been filed
(74) Representative: Levpat

(57) **Abstract**

The invention relates to an aqueous two-component adhesive and use thereof, in particular to the use for laminating a rigid substrate and a plastic film, a laminated product comprising the adhesive, and a method for producing a laminated product. The aqueous two-component adhesive comprises component A and component B, the component A comprising more than 50 % by weight and not more than 99 % by weight of an aqueous polyurethane dispersion; the B component comprising 1 % by weight to 16 % by weight of water-dispersible modified polyisocyanate based on hexamethylene diisocyanate, the above weight percentage based on the amount of the adhesive being 100 % by weight; wherein the aqueous polyurethane dispersion comprises polyurethane dispersed therein, the enthalpy of melting of the polyurethane being 3 J/g to 100 J/g, measured at 20 °C to 100 °C for the first heating curve by DSC according to DIN65467. The aqueous two-component adhesive has the advantages of safety and environmental protection, excellent performance and low laminating temperature.

## Description

### Technical field

The invention relates to an aqueous two-component adhesive and use thereof, in particular to use for laminating a rigid substrate and a plastic film, a laminated product comprising the adhesive, and a method for producing a laminated product.

### Prior Art

Lamination refers to a processing technology of laminating a plastic film onto the surface of a rigid substrate by hot-pressing of the rigid substrate and the plastic film at a high temperature. Compared with the traditional coating process by coating on the surface of metal sheets, the process of laminating on the surface of metal sheets is more durable and more effective in terms of anti-moisture, anti-rust, antifouling and anti-corrosion effect, and has more diverse decoration options and has scratch resistance. Therefore, the laminating on the surface of metal sheets is widely used in industries such as interior or exterior decoration panels of buildings and housings of household appliances.

Commonly used adhesives for laminating metal sheets and plastic films are solvent-based systems, such as solvent-based acrylic adhesives, solvent-based saturated polyester resin adhesives, and solvent-based polyurethane adhesives. Most of the solvents used are benzene or ketone solvents, which not only cause great damage to the on-site workers, but also easily cause environmental pollution and potential safety hazard.

CN104263310B discloses a one-component moisture curing polyurethane adhesive and a preparation method thereof, wherein said adhesive comprises an organic solvent as a solvent and is produced from a polyether diol and/or a polyester diol, diphenylmethane diisocyanate, polymethylene polyphenylen isocyanate and a trihydric primary alcohol having a molecular weight of less than 200, and is suitable for splicing and mortising (or assembling) of wood, bonding and laminating of stone, fire boards, plastic aluminum plates, bakelite plates, oak plates, certain metal plates such as aluminum plates, iron plates, galvanized plates with a PVC film, especially for bonding of rosewood and mahogany. Said system is a solvent-based adhesive.

CN103468197A discloses a method for laminating a PVC film and a metal plate by using a PVC laminating adhesive. A catalyst is used for chemically reacting of hydroxyl groups of the polyester polyol with isocyanate groups of the curing agent. The polyurethane generated under the action of the accelerator has strong adhesion to the metal plate and the PVC film. The organic solvent content used in said method is 60 to 70 % by weight of the adhesive, which results in an essentially solvent-based system. In addition, the adhesive needs a temperature of 200 °C to 300 °C during the lamination process to achieve good lamination results, which causes not only high energy consumption but also inconvenience during the actual operation.

Therefore, the industry begins to study the use of aqueous systems instead of solvent-based systems for laminating of metal plates and plastic films.

CN103129047B discloses a method for producing a crystal color plate by using a steel plate as a substrate. A chemical treatment layer is coated on both the obverse and the reverse sides of the substrate such as a cold rolled sheet, a hot-dip galvanized sheet, an electro-galvanized sheet, a zinc-iron alloy sheet or an aluminum alloy sheet. The obverse treatment layer is coated with an adhesive layer on the top side, and the reverse treatment layer is coated with a paint layer on the bottem side. The adhesive layer is laminated with a PET/PETG/PVC composite color film on the top side. The adhesive is a polyurethane thermosetting composite adhesive with a molecular weight of 20000 to 100000 and has a curing temperature is 206 °C to 224 °C, which causes high energy consumption and inconvenience during the practical operation.

CN107386539A discloses a steel/plastic composite tile of a three-layer structure, in which three layers are sequentially arranged from top to bottom and are integrated by high temperature bonding. These three layers are a surface layer made of weather-resistant resin, a skeleton layer made of galvanized steel sheet and a bottom layer made of thermoplastic resin. The layer of weather-resistant resin is a PVC/ASA composite film, a PVC/PVDF composite film or a PVC/PMMA composite film. In the method, amino acrylate adhesive is used and the temperature of the drying tunnel is 180 to 250 °C.

CN104497923A discloses a laminating adhesive for laminating of iron, comprising butyl acrylate, methyl methacrylate, vinyl acetate, vinyl ester of versatic acid, a mixture of a polyester diol and isophorone diisocyanate in a molar ratio of 1:1, polyurethane curing agent, silane coupling agent, polycarbosilane, emulsifier, polymerization inhibitor, catalyst, initiator, defoamer, wetting agent, deionized water. Specifically, the polyester diol is reacted with isophorone diisocyanate to obtain the polyurethane. A modified PVA, an emulsifier, butyl acrylate, methyl methacrylate, vinyl ester of versatic acid and a catalyst are added for reaction to obtain a pre-emulsion. An initiator is added in the pre-emulsion for further reaction. The mixture is then mixed with polyurethane curing agent, polycarbosilane, silane coupling agent, polymerization inhibitor, defoamer and wetting agent to obtain the adhesive.

JP2008260831 discloses an aqueous adhesive for laminating a film and a metal plate, comprising 60% to 95 % by weight of a carboxyl group-containing polyester emulsion and 5 % to 40 % by weight of a carboxyl group-containing polyurethane dispersion, a mixed curing agent of isocyanate and oxazoline or of isocyanate and carbodiimide, and silane coupling agent. The adhesive comprises a solvent.

US5455293A discloses an adhesive for flooring comprising an aqueous polyurethane emulsion, a rosin emulsion, a polyacrylate thickener and an aliphatic polyisocyanate curing agent. The aqueous polyurethane emulsion is amorphous. The adhesive is suitable for wet bonding.

Therefore, it is desirable to develop an aqueous adhesive suitable for laminating a metal and a plastic film, which is safe, environmentally friendly and has excellent performance and a low laminating temperature.

### Summary of the invention

The object of the present invention is to provide an aqueous two-component adhesive and use thereof, in particular to the use for laminating a rigid substrate and a plastic film, a laminated product comprising the adhesive, and a method for producing a laminated product.

The aqueous two-component adhesive according to the present invention comprises component A and component B, said component A comprising more than 50 % by weight and not more than 99 % by weight of an aqueous polyurethane dispersion; said component B comprising 1 % by weight to 16 % by weight of a water-dispersible modified polyisocyanate based on hexamethylene diisocyanate, the above weight percentage based on the amount of the adhesive being 100 % by weight;
wherein the aqueous polyurethane dispersion comprises polyurethane dispersed therein, the enthalpy of melting of the polyurethane being 3 J/g to 100 J/g, measured at 20 °C to 100 °C for the first heating curve by DSC according to DIN65467.

According to one aspect of the present invention, a laminated product is provided, comprising:
a rigid substrate,
a plastic film; and
a coating formed by curing of the adhesive according to the present invention applied on at least one surface of the rigid substrate and the plastic film;
wherein the rigid substrate and the plastic film are laminated with the adhesive.

According to another aspect of the present invention, a method for producing a laminated product is provided, comprising the following steps:
i. applying the adhesive according to the present invention onto at least one surface of a rigid substrate;
ii. heating the surface of the rigid substrate coated with the adhesive; and
iii. laminating the plastic film and the surface of the rigid substrate coated with the adhesive, and curing to obtain the laminated product.

According to another aspect of the present invention, use of the adhesive according to the present invention for producing a laminated product is provided.

According to another aspect of the present invention, use of the adhesive according to the present invention for laminating a rigid substrate and a plastic film is provided.

The aqueous two-component adhesive of the present invention is particularly suitable for laminating a rigid substrates and a plastic film.

The aqueous two-component adhesive of the present invention comprises water as a dispersion medium, is safe and environmentally friendly, and has no physical harm to on-site workers.

The aqueous two-component adhesive of the present invention has good performance, which is equivalent to that of the solvent-based adhesive systems. Specifically, the aqueous two-component adhesive of the present invention has good bonding strength and has good performance in 90° bending test, resistance to high temperature of 100°C, impact resistance and good performance in salt spray test and at alternating high and low temperature.

The method for producing a laminated product by using the aqueous two-component adhesive of the present invention is carried out by a process similar to that of a solvent-based adhesive system, so that it is not necessary to replace the existing production equipments.

In addition, in the method for producing a laminated product of the present invention, the temperature for laminating the plastic film and the surface of the rigid substrate coated with the adhesive of the present invention is lower than that of the existing adhesives, which reduces the energy consumption and potential safety hazard in the production process.

### Embodiments

The invention provides an aqueous two-component adhesive, which comprises component A and component B, said component A comprising more than 50 % by weight and not more than 99 % by weight of an aqueous polyurethane dispersion; said component B comprising 1 % by weight to 16 % by weight of a water-dispersible modified polyisocyanate based on hexamethylene diisocyanate, the above weight percentage based on the amount of the adhesive being 100 % by weight;
wherein the aqueous polyurethane dispersion comprises polyurethane dispersed therein, the enthalpy of melting of the polyurethane being 3 J/g to 100 J/g, measured at 20 °C to 100 °C for the first heating curve by DSC according to DIN65467.

The invention also provides use of the aqueous two-component adhesive, in particular the use for laminating a rigid substrate and a plastic film, a laminated product comprising the adhesive, and a method for producing a laminated product.

The term "curing" as used herein refers to a process from the liquid state to the solid state.

The term "adhesive" as used herein refers to a mixture containing curable and tacky chemical components and is also used as a synonym for adhesive agent and/or sticking agent and/or sealant and/or bonding agent.

The term "polyurethane" as used herein refers to polyurethane urea and/or polyurethane polyurea and/or polyurea and/or polythiourethane.

The term "laminating" as used herein refers to covering a rigid substrate with a flexible substrate, especially a plastic film and combining the two together.

### Adhesive

The solid content of the adhesive is preferably 10% to 90 % by weight, based on the amount of the adhesive being 100 % by weight.

The curing temperature of the adhesive is preferably 100 °C to 180 °C, and most preferably 140 °C to 170 °C.

The A component and the B component are preferably stored separately, and are mixed together before use.

### Component A

The amount of the aqueous polyurethane dispersion is preferably more than 50 % by weight and less than or equal to 98 % by weight, more preferably 70 % by weight to 98 % by weight, most preferably 85 % by weight to 96 % by weight, based on the amount of the adhesive 100 % by weight.

### Aqueous polyurethane dispersion

The aqueous polyurethane dispersion comprises water and polyurethane.

The enthalpy of melting of the polyurethane is preferably 20 J/g to 100 J/g, and most preferably 40 J/g to 55 J/g, measured at 20 °C to 100 °C for the first heating curve by DSC according to DIN65467.

The polyurethane is preferably obtained by reacting a system comprising an aliphatic polyisocyanate and a polyester polyol.

The ratio of the isocyanate groups of the aliphatic polyisocyanate to the isocyanate-reactive groups such as amino, hydroxyl or thiol groups in the system is 1.05 to 3.5, preferably 1.2 to 3.0, and most preferably 1.3 to 2.5.

The aqueous polyurethane dispersion may be added to the adhesive in the form of a dispersion, or may be obtained by adding and mixing water and a solid polyurethane polymer, and most preferably added directly in the form of a dispersion.

The solid content of the aqueous polyurethane dispersion is preferably 10 to 70 % by weight, more preferably 45 to 65 % by weight, and most preferably 45 to 55 % by weight, based on the amount of the aqueous polyurethane dispersion being 100 % by weight.

The aqueous polyurethane dispersion is preferably an anionic and/or a non-ionic aqueous polyurethane dispersion, and most preferably an anionic aqueous polyurethane dispersion.

The anionic aqueous polyurethane dispersion comprises a small amount of hydrophilic anionic groups. The amount of the hydrophilic anionic groups is preferably 0.1 to 15 milligram equivalent per 100 gram of solid polyurethane, and most preferably 1.6 to 14 milligram equivalent per 100 gram of solid polyurethane.

The minimum laminating temperature of the aqueous polyurethane dispersion is preferably 50 °C to 80 °C, measured using Raynger ST infrared thermometer from Raytek Company.

### Aliphatic polyisocyanate

The isocyanate functionality of the aliphatic polyisocyanate is preferably not less than 2.

The aliphatic polyisocyanate is preferably one or more selected from the group comprising 1,4-butylene diisocyanate, pentamethylene diisocyanate (PDI), hexamethylene diisocyanate (HDI), isophorone diisocyanate (IPDI), 2,2,4-trimethyl-hexamethylene diisocyanate, 2,4,4-trimethyl-hexamethylene diisocyanate, isomeric bis(4,4'-isocyanatocyclohexyl) methane, mixture of isomeric bis(4,4'-isocyanatocyclohexyl) methane with any isomer content, 1,4-cyclohexylene diisocyanate, 1,4-phenylene diisocyanate, 2,4-tolylene diisocyanate, 2,6-tolylene diisocyanate, 1,5-naphthylene diisocyanate, diphenylmethane-2,2'-diisocyanate, diphenylmethane-2,4'-diisocyanate, diphenylmethane-4,4'-diisocyanate, 1,3-bis(2-isocyanatoprop-2-yl)-benzene, 1,4-bis(2-isocyanatoprop-2-yl) benzene (TMXDI), 1,3-bis(isocyanatomethyl) benzene (XDI), and alkyl 2,6-diisocyanatohexanate containing C1-C8 alkyl groups (lysine diisocyanate), further preferably one or more selected from the group comprising pentamethylene diisocyanate (PDI), hexamethylene diisocyanate (HDI), isophorone diisocyanate (IPDI), 4-isocyanatomethyloctane 1,8-diisocyanate (nonane triisocyanate), triphenylmethane 4,4', 4"-triisocyanate and isomeric bis(4,4'-isocyanatocyclohexyl) methane.

The aliphatic polyisocyanate may be a derivative of polyisocyanates described above having uretdione, isocyanurate, urethane, allophanate, biuret, iminooxadiazine dione and/or oxadiazinetrione structure. Said derivative has preferably two or more free isocyanate groups.

The aliphatic polyisocyanate is most preferably one or more selected from the group comprising hexamethylene diisocyanate and isophorone diisocyanate.

The amount of the aliphatic polyisocyanate is preferably 5 % to 40 % by weight, further preferably 5 % to 35 % by weight, and most preferably 10 % to 30 % by weight, based on the amount of the system being 100 % by weight.

### Polyester polyol

The number average molecular weight of the polyester polyol is preferably 400 to 5000. The number average molecular weight is measured by gel permeation chromatography at 40 °C using tetrahydrofuran as a mobile phase and polystyrene as standard.

The number average molecular weight of the polyester polyol is most preferably 900 to 3500. The number average molecular weight is measured by gel permeation chromatography at 40 °C using tetrahydrofuran as a mobile phase and polystyrene as standard.

The hydroxyl group (OH) functionality of the polyester polyol is preferably 1.8 to 2.2.

The polyester polyol is preferably a polycondensate of a diol and optionally a triol and a tetraol with a dicarboxylic acid and optionally a tricarboxylic acid and a tetracarboxylic or a hydroxycarboxylic acid or a lactone. When the average functionality of the diol and optionally the triol and thetetraol is more than 2, a monocarboxylic acid can also be used for polycondensation to obtain a polyester polyol. The monocarboxylic acid is preferably benzoic acid and/or heptane acid.

The diol is preferably one or more selected from the group comprising ethylene glycol, butanediol, diethylene glycol, triethylene glycol, polyalkylene glycol such as polyethylene glycol, 1,2-propanediol, 1,3-propanediol, 1,3-butanediol, 1,4-butanediol, 1,6-hexanediol and isomers thereof, neopentyl glycol and neopentyl glycol hydroxypivalate, most preferably one or more selected from the group comprising 1,6-hexanediol and isomers thereof, neopentyl glycol and neopentyl glycol hydroxypivalate.

The triol or tetraol is preferably one or more selected from the group comprising trimethylolpropane, glycerol, erythritol, pentaerythritol, trimethylol benzene, and trihydroxyethyl isocyanurate.

The dicarboxylic acid is preferably one or more selected from the group comprising phthalic acid, isophthalic acid, terephthalic acid, tetrahydrophthalic acid, hexahydrophthalic acid, cyclohexanedicarboxylic acid, adipic acid, azelaic acid, sebacic acid, glutaric acid, tetrachlorophthalic acid, maleic acid, fumaric acid, itaconic acid, malonic acid, suberic acid, 2-methylsuccinic acid, 3,3-diethylglutaric acid and 2,2-dimethylsuccinic acid. As for the dicarboxylic acid, the corresponding anhydride may also be used as the acid source.

The lactone is preferably one or more selected from the group comprising caprolactone, caprolactone homologues, butyrolactone and butyrolactone homologues, most preferably caprolactone.

The polyester polyol is most preferably a polybutylene adipate polyol.

The enthalpy of melting of the polyester polyol is 3 J/g to 100 J/g, preferably 20 J/g to 100 J/g, measured at 20 °C to 100 °C for the first heating curve by DSC according to DIN65467.

The amount of the polyester polyol is preferably 55 % to 90 % by weight, more preferably 60 % to 90 % by weight, and most preferably 65 % to 85 % by weight, based on the amount of the system being 100 % by weight.

### Optionally a compound with a molecular weight of 32 g/mol to 400 g/mol

The system for preparing the polyurethane may further comprise a compound having a molecular weight of 32 g/mol to 400 g/mol.

The compound having a molecular weight of 32 g/mol to 400 g/mol is preferably one or more selected from the group comprising hydroxy-functional compounds having a molecular weight of 32 g/mol to 400 g/mol and amino-functional compounds having a molecular weight of 32 g/mol to 400 g/mol.

The hydroxy-functional compound is preferably one or more selected from the group comprising polyols having up to 20 carbon atoms, ester diols, and monofunctional or isocyanate-reactive hydroxyl-containing compounds.

The polyol having up to 20 carbon atoms is preferably one or more selected from the group comprising ethylene glycol, diethylene glycol, triethylene glycol, 1,2-propanediol, 1,3-propanediol, 1,4-butanediol, 1,3-butanediol, cyclohexanediol, 1,4-cyclohexanedimethanol, 1,6-hexanediol, neopentyl glycol, hydroquinone dihydroxyethyl ether, bisphenol A (2,2-bis(4-hydroxyphenyl) propane), hydrogenated bisphenol A (2,2-bis(4-hydroxycyclohexyl) propane), trimethylolpropane, glycerol and pentaerythritol.

The ester diol is preferably one or more selected from the group comprising α-hydroxybutyl ε-hydroxyhexanoate, ω-hydroxyhexyl γ-hydroxybutyrate, β-hydroxyethyl adipate, and β-hydroxyethyl terephthalate.

The monofunctional or isocyanate-reactive hydroxyl-containing compound is preferably one or more selected from the group comprising ethanol, n-butanol, ethylene glycol monobutyl ether, diethylene glycol monomethyl ether, ethylene glycol monobutyl ether, diethylene glycol monobutyl ether, propylene glycol monomethyl ether, dipropylene glycol monomethyl ether, tripropylene glycol monomethyl ether, dipropylene glycol monopropyl ether, propylene glycol monobutyl ether, dipropylene glycol monobutyl ether, tripropylene glycol monobutyl ether, 2-ethylhexanol, 1-octanol, 1-dodecanol, 1-hexadecanol, 1,6-hexanediol, 1,4-butanediol, neopentyl glycol, and trimethylolpropane, most preferably one or more selected from the group comprising 1,6-hexanediol, 1,4-butanediol, neopentyl glycol, and trimethylolpropane.

The amino-functional compound having a molecular weight of 32 g/mol to 400 g/mol is preferably one or more selected from the group comprising 1,2-ethylenediamine, 1,4-diaminobutane, and isophorone diamine.

The weight of the compound having a molecular weight of 32 g/mol to 400 g/mol is preferably 0.5 % by weight to 20 % by weight, further preferably 0.5 % by weight to 15 % by weight, and most preferably 0.5 % by weight to 14 % by weight, based on the amount of the system being 100 % by weight.

### Optionally an isocyanate-reactive anionic hydrophilizing agent or potentially anionic hydrophilizing agent

The system for producing the polyurethane may further comprises an isocyanate-reactive anionic hydrophilizing agent or potentially anionic hydrophilizing agent.

The isocyanate-reactive anionic hydrophilizing agent or potentially anionic hydrophilizing agent preferably comprises at least one isocyanate-reactive group such as a hydroxyl group, and at least one functional group such as COO-M⁺, -SO₃-M⁺, -PO(O-M⁺)₂, wherein M⁺ is preferably one or more selected from the group comprising metal cations, H⁺, NH₄⁺ and NHR₃⁺, and R is preferably one or more selected from the group comprising C1-C12 alkyl, C5-C6 cycloalkyl, and C2-C4 hydroxyalkyl. The above-mentioned functional group is under a pH-dependent dissociation equilibrium when interacting with an aqueous medium, and can thus be negatively charged or neutral.

The isocyanate-reactive anionic hydrophilizing agent or potentially anionic hydrophilizing agent is further preferably one or more selected from the group comprising monohydroxycarboxylic acid, dihydroxycarboxylic acid, monohydroxysulfonic acid, dihydroxysulfonic acid, monohydroxyphosphonic acid, dihydroxyphosphonic acid, and salts thereof, most preferably one or more selected from the group comprising those containing a carboxylate anion, a carboxylic acid group and a sulfonate anion.

The amount of the isocyanate-reactive anionic hydrophilizing agent or potentially anionic hydrophilizing agent is preferably 0.1 % to 25 % by weight, more preferably 0.1 % to 15 % by weight, and most preferably 0.1 % to 13.5 % by weight, based on the amount of the system being 100 % by weight.

### Method for preparing the aqueous polyurethane dispersion

The method for preparing the aqueous polyurethane dispersion comprises preferably the following steps:
step a, preparing the isocyanate-functional prepolymer by reacting a system comprising
at least a polyisocyanate,
at least a polyester polyol,
optionally a hydroxy-functional compound having a molecular weight of 32 to 400 g/mol, and
optionally an isocyanate-reactive anionic hydrophilizing agent or potentially anionic hydrophilizing agent;
optionally step b, chain extension of all or part of the free isocyanate groups of the isocyanate-functional prepolymer using
at least an amino-functional compound having a molecular weight of 32 to 400 g/mol, and/or
at least an isocyanate-reactive anionic hydrophilizing agent or potentially anionic hydrophilizing agent, preferably having an amino function;
step c, dispersing the obtained isocyanate-functional prepolymer into water before, during or after step b, where any potentially anionic groups present are converted into an ionic form by partial or complete reaction with a neutralizer, preferably after step b.

In a preferred embodiment for preparing the aqueous polyurethane dispersion, the components of the system are used in the following amounts, wherein the respective amounts add up to 100 % by weight:
5 % to 40 % by weight of a polyisocyanate,
55 % to 90 % by weight of a polyester polyol,
0.5 % to 20 % by weight of a hydroxy-functional compound having a molecular weight of 32 to 400 g/mol and an isocyanate-reactive anionic hydrophilizing agent or potentially anionic hydrophilizing agent,
0.1 % to 25 % by weight of an amino-functional compound having a molecular weight of 32 to 400 g/mol and an isocyanate-reactive anionic hydrophilizing agent or potentially anionic hydrophilizing agent.

In another preferred embodiment for preparing the aqueous polyurethane dispersion, the components of the system are used in the following amounts, wherein the respective amounts add up to 100 % by weight:
5 % to 35 % by weight of a polyisocyanate,
60 % to 90 % by weight of a polyester polyol,
0.5 % to 15 % by weight of a hydroxy-functional compound having a molecular weight of 32 to 400 g/mol and an isocyanate-reactive anionic hydrophilizing agent or potentially anionic hydrophilizing agent,
0.1 % to 15 % by weight of an amino-functional compound having a molecular weight of 32 to 400 g/mol and an isocyanate-reactive anionic hydrophilizing agent or potentially anionic hydrophilizing agent.

In yet another preferred embodiment for preparing the aqueous polyurethane dispersion, the components of the system are used in the following amounts, wherein the respective amounts add up to 100 % by weight:
10 % to 30 % by weight of polyisocyanate,
65 % to 85 % by weight of a polyester polyol,
0.5 % to 14% by weight of a hydroxy-functional compound having a molecular weight of 32 to 400 g/mol and an isocyanate-reactive anionic hydrophilizing agent or potentially anionic hydrophilizing agent,
0.1 % to 13.5 % by weight of an amino-functional compound having a molecular weight of 32 to 400 g/mol and an isocyanate-reactive anionic hydrophilizing agent or potentially anionic hydrophilizing agent.

The solvent still present in the aqueous polyurethane dispersion after dispersion can be removed by distillation. The solvent can also be removed during the dispersion process.

The amount of the organic solvent remaining in the aqueous polyurethane urea dispersion is preferably less than 1.0 % by weight, based on the amount of the aqueous polyurethane urea dispersion being 100 % by weight.

The solvent is miscible with water but inert to isocyanate groups, preferably one or more selected from the group comprising acetone, butanone, tetrahydrofuran, acetonitrile, dipropylene glycol dimethyl ether, and 1-methyl-2-pyrrolidone, most preferably acetone and/or butanone.

The solvent may be used for reaction under normal pressure or elevated pressure.

All processes known in the art can be used to prepare the aqueous polyurethane dispersions of the present invention, such as emulsifier/shear force process, acetone process, prepolymer mixing process, melt emulsification process, ketimine process and spontaneous solid dispersion process or a process derived therefrom, preferably the melt emulsification process or the acetone process, most preferably the acetone process. These processes are summarized in Methoden der organischen Chemie (Houben-Weyl, Erweiterungs-und Folgebände zur 4. Auflage, Volume E20, H Bartl and J.Falbe, Stuttgart, New York, Thieme1987, p.1671-1682).

In the acetone method, all or part of the components of step a are usually introduced firstly to prepare an isocyanate-functional prepolymer, and optionally diluted with a solvent that is miscible with water but inert to isocyanate groups, and heated to 50 to 120 °C.

Any components of step i that were not added at the beginning of the reaction are then metered in.

When preparing an isocyanate-functional prepolymer from the components of step a, the molar ratio of isocyanate groups to isocyanate-reactive groups is 1.05 to 3.5, preferably 1.2 to 3.0, and most preferably 1.3 to 2.5.

The components of step a are partially or completely, preferably completely converted into isocyanate-functional prepolymers.

The isocyanate-functional prepolymer obtained in step a may be in the solid state or the liquid state.

If the isocyanate-functional prepolymer obtained is not yet dissolved or is only partially dissolved, the prepolymer is further dissolved using an aliphatic ketone such as acetone or 2-butanone.

In step b, the NH₂- and/or NH-functional components are partially or completely reacted with the residual isocyanate groups of the isocyanate-functional prepolymer. Chain extension or termination is preferably carried out before dispersion into water.

For chain termination, amino-functional compounds are generally used, preferably one or more selected from the group comprising methylamine, ethylamine, propylamine, butylamine, octylamine, laurylamine, stearylamine, isononyloxypropylamine, dimethylamine, diethylamine, dipropylamine, dibutylamine, N-methylaminopropylamine, diethyl(methyl)aminopropylamine, morpholine, piperidine, or suitable substituted derivatives thereof, amidoamines obtained from diprimary amines and monocarboxylic acids, monoketoximes of diprimary amines, and primary/tertiary amines.

The components of step b may optionally be used alone or mixed in a form diluted by water or a solvent, and the addition may be performed in any order.

### An aqueous polymer dispersion different from the aqueous polyurethane dispersion

The component A further comprises an aqueous polymer dispersion different from the aqueous polyurethane dispersion.

The amount of the aqueous polymer dispersion different from the aqueous polyurethane dispersion is preferably not more than 48 % by weight, based on the amount of the adhesive being 100 % by weight.

The aqueous polymer dispersion different from the aqueous polyurethane dispersion is preferably one or more selected from the group comprising ethylene-vinyl acetate copolymer emulsion, petroleum resin polymer emulsion, rosin polymer emulsion, polyacrylate dispersion, polybutadiene dispersion, acrylonitrile-styrene copolymer emulsion, butadiene-styrene copolymer emulsion, terpene-phenolic formaldehyde polymer emulsion, polychloroprene dispersion, and polyvinylidene chloride dispersion.

### Component B

The water-dispersible modified polyisocyanate based on hexamethylene diisocyanate has an isocyanate group content of preferably 15 to 25 % by weight, a viscosity of preferably 1000 mPa · s to 3000 mPa · s, and an isocyanate functionality of preferably 2.5 to 3.5.

The amount of the water-dispersible modified polyisocyanate based on hexamethylene diisocyanate is preferably 2 % to 15 % by weight, further preferably 3 % to 12 % by weight, and most preferably 3 % to 6 % by weight, based on the amount of the adhesive being 100 % by weight.

The water-dispersible modified polyisocyanate based on hexamethylene diisocyanate has a solid content of 80 % to 100 % by weight, based on the water-dispersible modified polyisocyanate based on hexamethylene diisocyanate being 100 % by weight.

The water-dispersible modified polyisocyanate based on hexamethylene diisocyanate is preferably one or more selected from the group comprising polyether-modified polyisocyanates based on hexamethylene diisocyanate and ionically modified polyisocyanates based on hexamethylene diisocyanate, most preferably one or more of selected from the group comprising polyether-modified aliphatic trimers based on hexamethylene diisocyanate and ionically modified aliphatic trimers polyisocyanates based on hexamethylene diisocyanate.

### Thickener

Preferably, the adhesive further comprises a thickener. The thickener may be added to the component A and/or component B, preferably to the component A.

The amount of the thickener is preferably 0.1 % by weight to 3.0 % by weight, based on the amount of the adhesive being 100 % by weight.

The amount of the thickener is preferably 0.1 % by weight to 0.5 % by weight, based on the amount of the adhesive being 100 % by weight.

The thickener is preferably one or more selected from the group comprising associative polyurethane thickeners and alkali-swellable acrylic thickeners, most preferably associative polyurethane thickeners.

### Wetting agent

The adhesive preferably further comprises a wetting agent. The wetting agent may be added to the component A and/or component B, preferably to the component A.

The amount of the wetting agent is preferably 0.1 % to 1.0 % by weight, based on the amount of the adhesive being 100 % by weight.

The amount of the wetting agent is most preferably 0.3 % to 0.8 % by weight, based on the amount of the adhesive being 100 % by weight.

The wetting agent is preferably one or more selected from the group comprising polyether-modified siloxanes, alkynediol ethoxylate, polyphosphate salt, naphthalenesulfonic acid, ammonium polyacrylate and sodium polyacrylate, most preferably one or more selected from the group comprising polyether-modified siloxanes and alkynediol ethoxylate.

### Other additives

The adhesive may further comprise other additives, for example, a light stabilizer, a filler, an ultraviolet light absorber, and an antioxidant.

The filler is preferably one or more selected from the group comprising quartz powder, quartz sand, barite, calcium carbonate, chalk, dolomite, and talc.

The amounts of the light stabilizer, ultraviolet light absorber and antioxidant are each independently preferably 0.01 % by weight to 5 % by weight, most preferably 0.05 % by weight to 3 % by weight, based on the amount of the adhesive being 100 % by weight.

### Laminated product

The rigid substrate is preferably a metal substrate or a metal composite substrate.

The metal substrate is preferably a galvanized iron sheet, a galvanized steel sheet, a cold-rolled sheet, a hot-dip galvanized sheet, an electro-galvanized sheet, a zinc-iron alloy sheet, or an aluminum alloy sheet.

The plastic film is preferably a PVC film, an ASA film, a PET film, a PETG film, an ASA/PVC composite film, a PMMA/PVC composite film, a PVDF/PVC composite film, a PET/PVC composite film or a PETG/PVC composite film.

The laminated product is preferably an interior or exterior decoration panel for a building, an encaustic tile for a roof or a housing for a household appliance.

The adhesive is preferably applied to the surface of a rigid substrate.

### Method for producing a laminated product

Prior to step i, the rigid substrate may be washed with a solvent and then dried.

Preferably, a drying tunnel is used for heating.

The heating brings preferably the temperature of the surface of the rigid substrate to 100 °C to 180 °C, and most preferably 140 °C to 170 °C.

Step iii is preferably carried out immediately after completion of step ii.

The lamination is preferably carried out at a temperature of the surface of the rigid substrate coated with the adhesive of 100 °C to 180 °C, and most preferably at a temperature of the surface of the rigid substrate coated with the adhesive of 140 °C to 170 °C.

After the plastic film and the surface of the rigid substrate coated with the adhesive are laminated, it is preferable to press the plastic film and the rigid substrate. Then, the film product is obtained.

The coating may refer to applying the adhesive onto the entire surface of the substrate or only one or more parts of the surface of the substrate.

The pressing may refer to pressing with a rubber roller or a metal roller.

The rigid substrate is preferably a metal substrate or a metal composite substrate.

The metal substrate is preferably a galvanized iron sheet, a galvanized steel sheet, a cold-rolled sheet, a hot-dip galvanized sheet, an electro-galvanized sheet, a zinc-iron alloy sheet, or an aluminum alloy sheet.

The plastic film is preferably a PVC film, an ASA film, a PET film, a PETG film, an ASA/PVC composite film, a PMMA/PVC composite film, a PVDF/PVC composite film, a PET/PVC composite film or a PETG/PVC composite film.

The laminated product is preferably an interior or exterior decoration panel for a building, an encaustic tile for a roof or a housing for a household appliance.

### Examples

Unless defined otherwise, all technical and scientific terms used herein have the same meaning as commonly understood by those skilled in the art. When the definitions of the terms in this specification conflict with the meanings commonly understood by those skilled in the art, the definitions described herein shall apply.

Unless otherwise stated, all numerical values of the amount of components, reaction conditions, etc. used in the specification and claims are understood to be modified by the term "about". Therefore, unless indicated to the contrary, the numerical parameters set forth herein are approximations that can be varied according to the desired performance required to be obtained.

As used herein, "and/or" means one or all of the elements mentioned.

As used herein, "including" and "comprising" encompass situations where only the elements mentioned are present, as well as situations where other elements not mentioned are present in addition to the elements mentioned.

All percentages in the present invention are weight percentages, unless otherwise stated.

The analytical measurements of the present invention are all carried out at 23 °C, unless otherwise stated.

Unless otherwise stated, "a," "an," and "the" as used in this specification are intended to include "at least one" or "one or more." For example, "a component" refers to one or more components, so more than one component may be considered and may be employed or used in the implementation of the described embodiments.

The isocyanate group (NCO) content is determined by volume according to DIN-EN ISO 11909. The measured data refer to free and potentially free NCO content.

Isocyanate functionality is measured according to GPC.

The viscosity is measured according to DIN EN ISO 3219: 1994-10 at 23 °C and a shear rate of 10 s⁻¹, in which a MV-DIN rotor is selected.

### Raw materials and reagents

Dispercoll U 42: aqueous polyurethane dispersion, solid content of 50 ± 2 % by weight, minimum heating temperature for adhesive layer 80 °C to 100 °C, amorphous aqueous polyurethane dispersion, available from Covestro Polymer Co., Ltd.

Dispercoll U 54: aqueous polyurethane dispersion, solid content of 50 ± 1 % by weight, minimum heating temperature for adhesive layer of 60 °C to 70 °C, enthalpy of melting of the polyurethane contained in the aqueous polyurethane dispersion of 51.01 J/g, available from Covestro Polymer Co., Ltd.

Dispercoll U 62: aqueous polyurethane dispersion, solid content of 50 ± 1 % by weight, minimum heating temperature for adhesive layer of 50 °C to 70 °C, enthalpy of melting of the polyurethane contained in the aqueous polyurethane dispersion of 41.00 J/g, available from Covestro Polymer Co., Ltd.

Dispercoll U 58: aqueous polyurethane dispersion, solid content of 50 ± 1 % by weight, minimum heating temperature for adhesive layer of 50 °C to 70 °C, enthalpy of melting of the polyurethane contained in the aqueous polyurethane dispersion of 46.09 J/g, available from Covestro Polymer Co., Ltd.

Dispercoll U 58/1: aqueous polyurethane dispersion, solid content of 50 ± 1 % by weight, minimum heating temperature for adhesive layer of 50 °C to 70 °C, enthalpy of melting of the polyurethane contained in the aqueous polyurethane dispersion of 50.19 J/g, available from Covestro Polymer Co., Ltd.

Dispercoll U XP 2612: aqueous polyurethane dispersion, solid content of 50 ± 1 % by weight, minimum heating temperature for adhesive layer of 65 °C to 75 °C, enthalpy of melting of the polyurethane contained in the aqueous polyurethane dispersion of 51.58 J/g, available from Covestro Polymer Co., Ltd.

Desmodur DN: water-dispersible modified polyisocyanate, polyether-modified aliphatic trimer based on hexamethylene diisocyanate (HDI), solid content of 100 % by weight, isocyanate group content of 21.8 ± 0.5 % by weight, viscosity of about 1250 mPa·s (23 °C), isocyanate functionality of 3.4, available from Covestro Polymer Co., Ltd.

Bayhydur 3100: water-dispersible modified polyisocyanate, polyether-modified aliphatic trimer based on hexamethylene diisocyanate (HDI), solid content of 100 % by weight, isocyanate group content of 17.4 ± 0.5 % by weight, viscosity of about 2800 mPa·s (23 °C), isocyanate functionality of 3.1, available from Covestro Polymer Co., Ltd.

Dispercoll BL XP 2514: dimer based on toluene diisocyanate (TDI), solid content of 40 % by weight, isocyanate group content of 7.5 % to 10 % by weight, isocyanate functionality of 2, available from Covestro Polymer Co., Ltd.

BYK 349: Wetting agent, available from BYK.

Borchigel L75N: associative polyurethane thickener, available from OMG.

Commercially available solvent-based polyurethane adhesive: solid content of 20 ± 10 % by weight, viscosity of about 300 ± 50 mPa·s (23 °C).

### Method for producing a laminated product sample

1. Simply wiping the surface of the galvanized iron sheet with ethanol and drying for later use;
2. applying the adhesive onto a galvanized iron sheet, the compositions of the adhesives of the Examples and the Comparative Examples being listed in Table 2;
3. drying the coated galvanized iron sheet at 100 °C for 1 minute;
4. putting the ASA/PVC composite film on the surface of the galvanized iron sheet coated with the adhesive, and laminating with a laminator to obtain a laminated product sample, the temperature of the laminator being set to 150 °C;
5. leaving the obtained laminated product sample at room temperature for 7 days and testing its performance.

### Test methods

Bonding strength: A Zwick tensile machine is used to carry out a 180 ° peel strength test at a test speed of 50 mm/min. It is checked whether the PVC film or PVC composite film is broken.

90 ° bending test: The test pieces of the central part of samples are tested with the surface layer facing outward by bending longitudinally and laterally on a special bending machine by 90°, the bending radius being the thickness of the test piece. The lateral and longitudinal bending marks, cracks and peeling behaviours are checked.

100 °C high temperature test: The sample is dried in an oven at 100 °C for 1 hour. The marks, cracks and peeling behaviours are checked for the edges of the surface layer of samples.
Impact resistance: A BYK impact test equipment is used. A sample is punched forward and backward by a falling ball of 1 kg with a diameter of 20 mm from a height of 1 m. The marks, cracks and peeling behaviours are checked for the edges of the surface layer of samples.

Salt spray test: The salt spray (obtained from a mixture of 5% of NaCl solution, 5% of KCl solution and 5% of MgCl₂ solution) is tested at 60 °C for 400 hours to check the surface conditions of samples.

Test at alternating high and low temperature: Each cycle lasts for 48 hours, and the surface conditions of samples are checked after repeating four cycles. Each cycle includes: 8 hours at -40 °C, 4 hours at room temperature, 24 hours at 80 °C, 4 hours at room temperature, and 8 hours at - 40 °C.

### Criteria for test results

In Table 1, pass/fail criteria for each test result are listed.

**Table 1 Criteria for test results**

| Tests | Pass (√) | Fail (×) |
|---|---|---|
| Bonding strength | Broken | Unbroken |
| 90° bending | No marks, cracks and peeling off by lateral and longitudinal bending | Peeling off by lateral and longitudinal bending |
| 100°C high temperature | No marks, cracks or peeling off on the edges of sample surfaces | Peeling off on the edges of sample surfaces |
| Impact resistance | No marks, cracks or peeling off on the edges of sample surfaces | Marks, cracks or peeling off on the edges of sample surfaces |
| Salt spray test | No defects on sample surfaces | Defects on sample surfaces such as bubbling, peeling off, etc. |
| Alternating high and low temp. | No defects on sample surfaces | Defects on sample surfaces such as bubbling, peeling off, etc. |

### Examples 1-10 and Comparative Examples 1-6

In Table 2, the composition and results of sample tests of the adhesives of Examples 1-10 and Comp. 1-6 are listed.

It can be seen from Table 2 that the samples of laminated products of a rigid substrate and a plastic film obtained from the aqueous two-component adhesive provided by the present invention at a laminating temperature of 150 °C have passed all tests, indicating that the adhesives of the present invention have excellent performance. It can be seen by comparing Comparative Example 1 and Examples 1-10 that the sample obtained from the commercially available solvent-based polyurethane adhesives at a laminating temperature of 150 °C has failed. Only the sample obtained at a laminating temperature of 180 °C can achieve the performance equivalent to that of samples obtained from the adhesives of the present invention. It can be known from Comparative Examples 2 and 3 that the samples obtained by the adhesives fail in the bonding strength test and 100 °C high temperature test, when the enthalpy of melting of the polyurethane in the aqueous polyurethane dispersion of said adhesive is less than 3 J/g. It can be seen from Comparative Example 4 that the samples obtained by the adhesives fail in the bonding strength test, 90° bending test and 100 °C high temperature test, when the curing agent for the adhesives is a dimer based on toluene diisocyanate (TDI). It can be seen from Comparative 5 and 6 that the obtained samples fail in the bonding strength test, 90° bending test and 100 °C high temperature test, when the content of the water-dispersible modified polyisocyanate based on hexamethylene diisocyanate is more than 16 % by weight.

Those skilled in the art will readily understand that the present invention is not limited to the foregoing specific details, and the present invention can be implemented in other specific forms without departing from the spirit or main characteristics of the present invention. The embodiments are therefore to be considered as illustrative and not restrictive in any way, so that the scope of the present invention is indicated by the claims rather than by the foregoing description. Thus, any change should be regarded as belonging to the present invention, as long as it belongs to the meaning and the scope of equivalents of the claims.

**Table 2 Adhesive composition and results of sample tests**

| | Comp. 1 | | Comp. 2 | Comp. 3 | Comp. 4 | Comp. 5 | Comp. 6 | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|---|---|---|---|---|
| Component A | | | | | | | | | | | | | | | | | |
| Commercially available solvent-based polyurethane adhesive | 100.0 | | | | | | | | | | | | | | | | |
| Dispercoll U 42 | | | 99.2 | 99.2 | | | | | | | | | | | | | |
| Dispercoll U 54 | | | | | 99.2 | | | 99.2 | 99.2 | | | | | | | | |
| Dispercoll U 62 | | | | | | | | | | 99.2 | 99.2 | | | | | | |
| Dispercoll U 58 | | | | | | | | | | | | 99.2 | 99.2 | | | | |
| Dispercoll U 58/1 | | | | | | | | | | | | | | 99.2 | 99.2 | | |
| Dispercoll U XP 2612 | | | | | | 99.2 | 99.2 | | | | | | | | | 99.2 | 99.2 |
| BYK-349 | | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Borchi Gel L 75 N | | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |

| Component B | | | | | | | | | | | | | | | | | |
|---|---|---|---|---|---|---|---|---|---|---|---|---|---|---|---|---|---|
| Matched curing agent for commercially available solvent-based polyurethane adhesive | 5 | | | | | | | | | | | | | | | | |
| Desmodur DN | | | 5 | | | 22 | | 5 | | 5 | | 5 | | 5 | | 5 | |
| Bayhydur 3100 | | | | 5 | | | 22 | | 5 | | 5 | | 5 | | 5 | | 5 |
| Dispercoll BL XP 2514 | | | | | 12.5 | | | | | | | | | | | | |

| Sample tests | | | | | | | | | | | | | | | | | |
|---|---|---|---|---|---|---|---|---|---|---|---|---|---|---|---|---|---|
| Laminating temp./°C | 150 | 180 | 150 | 150 | 150 | 150 | 150 | 150 | 150 | 150 | 150 | 150 | 150 | 150 | 150 | 150 | 150 |
| Bonding strengh | × | √ | × | × | × | × | × | √ | √ | √ | √ | √ | √ | √ | √ | √ | √ |
| 90° bending | × | √ | √ | √ | × | × | × | √ | √ | √ | √ | √ | √ | √ | √ | √ | √ |
| 100°C high temperature | × | √ | × | × | × | × | × | √ | √ | √ | √ | √ | √ | √ | √ | √ | √ |
| Impact resistance | √ | √ | √ | √ | √ | √ | √ | √ | √ | √ | √ | √ | √ | √ | √ | √ | √ |
| Salt spray test | √ | √ | √ | √ | √ | √ | √ | √ | √ | √ | √ | √ | √ | √ | √ | √ | √ |
| Alternating high and low temp. | √ | √ | √ | √ | √ | √ | √ | √ | √ | √ | √ | √ | √ | √ | √ | √ | √ |

## Claims

1. An aqueous two-component adhesive, comprising component A and component B, said component A comprising more than 50 % by weight and not more than 99 % by weight of an aqueous polyurethane dispersion; said component B comprising 1 % by weight to 16 % by weight of a water-dispersible modified polyisocyanate based on hexamethylene diisocyanate, the above weight percentage based on the amount of the adhesive being 100 % by weight;
wherein the aqueous polyurethane dispersion comprises polyurethane dispersed therein, the enthalpy of melting of the polyurethane being 3 J/g to 100 J/g, measured at 20 °C to 100 °C for the first heating curve by DSC according to DIN65467.

2. The adhesive according to claim 1, wherein the polyurethane is obtained by reacting a system comprising an aliphatic polyisocyanate and polybutylene adipate polyol.

3. The adhesive according to claim 2, wherein the aliphatic polyisocyanate is one or more selected from the group comprising hexamethylene diisocyanate and isophorone diisocyanate.

4. The adhesive according to any one of claims 1 to 3, wherein the enthalpy of melting of the polyurethane is 20 J/g to 100 J/g, measured at 20 °C to 100 °C for the first heating curve by DSC according to DIN65467.

5. The adhesive according to any one of claims 1 to 4, wherein the amount of the water-dispersible modified polyisocyanate based on hexamethylene diisocyanate is 2 % to 15 % by weight, preferably 3 % to 12 % by weight, most preferably 3 % to 6 % by weight, based on the amount of the adhesive being 100 % by weight.

6. The adhesive according to claim any one of claims 1 to 5, wherein the water-dispersible modified polyisocyanate based on hexamethylene diisocyanate is one or more selected from the group comprising polyether-modified polyisocyanates based on hexamethylene diisocyanate and ionically modified polyisocyanates based on hexamethylene diisocyanate.

7. The adhesive according to any one of claims 1 to 6, wherein the component A further comprises an aqueous polymer dispersion different from the aqueous polyurethane dispersion, and the amount of the aqueous polymer dispersion is not more than 48 % by weight, based on the amount of the adhesive being 100 % by weight.

8. The adhesive according to any one of claims 1 to 7, wherein it further comprises an associative polyurethane thickener, and the amount of the thickener is 0.1 % by weight to 3.0 % by weight, based on the amount of the adhesive being 100 % by weight.

9. The adhesive according to any one of claims 1 to 8, wherein it further comprises a wetting agent, and the amount of the wetting agent is 0.1 % by weight to 1.0 % by weight, based on the amount of the adhesive being 100 % by weight.

10. A laminated product comprising:
a rigid substrate;
a plastic film; and
a coating formed by curing of the adhesive according to any one of claims 1 to 9 applied on at least one surface of the rigid substrate and the plastic film;
wherein the rigid substrate and the plastic film are laminated with the adhesive.

11. The laminated product according to claim 10, wherein the rigid substrate is a metal substrate or a metal composite substrate.

12. The laminated product according to claim 11, wherein the metal substrate is a galvanized iron sheet, a galvanized steel sheet, a cold-rolled sheet, a hot-dip galvanized sheet, an electro-galvanized sheet, a zinc-iron alloy sheet or an aluminum alloy sheet.

13. The laminated product according to any one of claims 10 to 12, wherein the plastic film is a PVC film, an ASA film, a PET film, a PETG film, an ASA/PVC composite film, a PMMA/PVC composite film, a PVDF/PVC composite film, a PET/PVC composite film or a PETG/PVC composite film.

14. The laminated product according to any one of claims 10 to 13, wherein the laminated product is an interior or exterior decoration panel for a building, an encaustic tile for a roof or a housing for a household appliance.

15. A method for producing a laminated product comprising the following steps:
i. applying the adhesive according to any one of claims 1 to 9 onto at least one surface of a rigid substrate;
ii. heating the surface of the rigid substrate coated with the adhesive; and
iii. laminating the plastic film and the surface of the rigid substrate coated with the adhesive, and curing to obtain the laminated product.

16. The method according to claim 15, wherein said laminating is carried out at a temperature of the surface of the rigid substrate coated with said adhesive of 100 °C to 180 °C, and most preferably said laminating is carried out at a temperature of the surface of the rigid substrate coated with said adhesive of 140 °C to 170 °C.

17. The method according to claim 15 or 16, wherein the rigid substrate is a metal substrate or a metal composite substrate.

18. The method according to claim 17, wherein the metal substrate is a galvanized iron sheet, a galvanized steel sheet, a cold-rolled sheet, a hot-dip galvanized sheet, an electro-galvanized sheet, a zinc-iron alloy sheet or an aluminum alloy sheet.

19. The method according to any one of claims 15 to 18, wherein the plastic film is a PVC film, an ASA film, a PET film, a PETG film, an ASA/PVC composite film, a PMMA/PVC composite film, a PVDF/PVC composite film, a PET/PVC composite film or a PETG/PVC composite film.

20. The method according to any one of claims 15 to 19, wherein the laminated product is an interior or exterior decoration panel for a building, an encaustic tile for a roof or a housing for a household appliance.

21. Use of the adhesive according to any one of claims 1 to 9 for producing a laminated product.

22. Use of the adhesive according to any one of claims 1 to 9 for laminating a rigid substrate and a plastic film.
